# EUROPÄISCHE PATENTSCHRIFT

(11) **EP 2 279 219 B1**
(45) Veröffentlichungstag und Bekanntmachung des Hinweises auf die Patenterteilung: **17.04.2013**
(21) Anmeldenummer: 09745719.6
(22) Anmeldetag: 12.05.2009
(51) Int. Cl.: C08G 63/199, C08G 64/02, C08G 18/32

(54) **VERWENDUNG EINES CYCLOHEXANDIOLGEMISCHES ZUR HERSTELLUNG VON POLYMEREN**
USE OF A CYCLOHEXANE DIOL MIXTURE FOR MANUFACTURING POLYMERS
UTILISATION D'UN MÉLANGE DE CYCLOHEXANEDIOLS POUR LA PRODUCTION DE POLYMÈRES

(30) Priorität: 14.05.2008 EP 08156169
(43) Veröffentlichungstag der Anmeldung: 02.02.2011
(73) Patentinhaber: BASF SE, 67056 Ludwigshafen (DE)
(72) Erfinder: MIJOLOVIC, Darijo, 68309 Mannheim (DE); GARNIER, Sebastien, 69469 Weinheim (DE); MIAO, Qiang, 68199 Mannheim (DE); GUIXA GUARDIA, Maria, 68163 Mannheim (DE); TEBBEN, Gerd-Dieter, 68239 Mannheim (DE); WIEBELHAUS, Dag, 67435 Neustadt (DE)
(86) Internationale Anmeldenummer: PCT/EP2009/055688
(87) Internationale Veröffentlichungsnummer: WO 2009/138387

(56) Entgegenhaltungen:
- DE-A1- 2 814 400
- DE-A1- 3 119 380

## Beschreibung

Die Erfindung betrifft einen Pulverlack, enthaltend ein Polymer , dadurch gekennzeichnet, dass das Polymer erhältlich ist durch Polykondensation oder Polyadduktbildung von monomeren Verbindungen, wobei als monomere Verbindung ein Gemisch aus Hydroxymethyl-cyclohexanpropanol oder dessen alkoxylierte Derivate und Hydroxymethyl-cyclohexanisopropanol oder dessen alkoxylierte Derivate (im Nachfolgenden kurz C1/C3-Cyclohexandiolgemisch genannt) mitverwendet wird.

Diole werden für die Herstellung von Polymeren, z.B. Polyestern oder Polyurethanen, benötigt. In EP-A 562 578 wird die Verwendung verschiedener Cyclohexandiole wie 1,4-Cyclohexandimethanol oder 1,4-Cyclohexandiethanol zur Herstellung von Polyestern beschrieben. Aus DE-A 31 19 380 ist auch die Verwendung von Hydroxymethylhydroxypropylcyclohexan für Polyester bekannt.

Gemische unterschiedlicher Hydroxymethylhydroxypropylcyclohexane sind durch Hydroformylierung von Vinylcyclohexen und anschließende Hydrierung erhältlich; ein derartiges Verfahren ist z.B. in DE-A 1032 241 beschrieben.

Grundsätzlich ist gewünscht, die anwendungstechnischen Eigenschaften von Polymeren bei ihren unterschiedlichen Verwendungen zu verbessern.

Bei einer Verwendung der Polymeren als Bindemittel in Beschichtungsmassen, Klebstoffen oder Dichtungsmassen ist insbesondere die Viskosität von Bedeutung sei es als Schmelzeviskosität (100% Systeme) oder als Lösungsviskosität (Polymerlösungen). Die hergestellten Beschichtungen sollen für Lackanwendungen gute mechanische Eigenschaften, wie Schlagzähigkeit und Elastizität, eine hohe Kratz- und Stoßfestigkeit, gute Beständigkeiten gegen Wasser, Lösmittel, Fett und Chemikalien und Umwelteinflüsse haben, sowie einen hohen Glanz aufweisen.

Aufgabe der vorliegenden Erfindung war, derartige Pulverlacke zur Verfügung zu stellen.

Demgemäß wurde der eingangs definierte Pulverlack gefunden.

### Zum C1/C3-Cyclohexandiolgemisch

Zur Herstellung des Polymeren wird, neben anderen monomeren Verbindungen, eine Gemisch verwendet, welches aus Hydroxymethyl-cyclohexanpropanol und Hydroxymethyl-cyclohexanisopropanol besteht; die vorstehenden Diole können auch in Form ihrer alkoxylierten Derivate vorliegen und in dieser Form verwendet werden (im Nachfolgenden zusammenfassend kurz C1/C3-Cyclohexandiolgemisch genannt).

Im Nachfolgenden sollen bei allen genannten Diolen des C1/C3 Gemisches immer auch die alkoxylierten Derivate umfasst sein. Die Diole können insbesondere mit Ethylenoxid oder Propylenoxid oder auch deren Gemische alkoxyliert sein; Die Alkoholgruppen können z.B. mit 1 bis 20, insbesondere 1 bis 10 Alkyoxygrupen alkoxyliert sein.

In einer bevorzugten Ausführungsform sind die Diole des erfindungsgemäßen C1/C3 Gemisches nicht alkoxyliert.

Bei dem Hydroxymethyl-cyclohexanpropanol kann es sich um
3-Hydroxymethyl-cyclohexanpropanol der Formel I 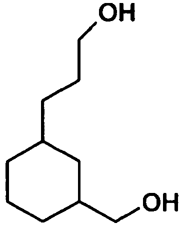 oder
4-Hydroxymethyl-cyclohexanpropanol der Formel II 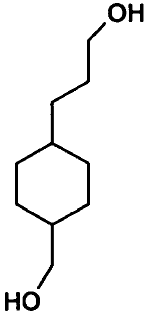 handeln.

3-Hydroxymethyl-cyclohexanpropanol kann dabei in zwei diastereomeren bzw 4 enatiomeren Formen (zwei Stereozentren : RR, SS, RS und SR) oder als beliebiges Gemisch dieser Formen vorliegen.

4-Hydroxymethyl-cyclohexanpropanol kann dabei in zwei diastereomeren Formen (kein Stereozentrum, zwei Stereoisomere: cis und trans) oder als Gemisch dieser Formen vorliegen.

Bei dem Hydroxymethyl-cyclohexanisopropanol kann es sich um
3-Hydroxymethyl-cyclohexanisopropanol der Formel III 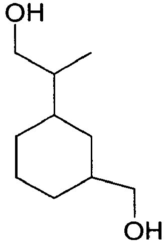 oder um 4-Hydroxymethyl-cyclohexanisopropanol der Formel IV 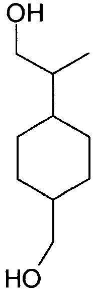 handeln.

3-Hydroxymethyl-cyclohexanisopropanol kann dabei in vier diastereomeren bzw. acht enatiomeren Formen (3 Stereozentren: RRR, SSS, RRS, SSR, RSR, SRS, RSS und SRR) oder als beliebiges Gemisch dieser Formen vorliegen.

4-Hydroxymethyl-cyclohexanisopropanol kann dabei in zwei diastereomeren bzw. 4 enantiomeren Formen (ein Stereozentrum: R-trans, S-trans, R-cis und S-cis) oder als beliebiges Gemisch dieser Formen vorliegen.

Das C1/C3-Cyclohexandiolgemisch enthält vorzugsweise
5 bis 95 Gew.-%, besonders bevorzugt 10 bis 90 Gew.-% und ganz besonders bevorzugt 20 bis 80 Gew.-% Hydroxymethyl-cyclohexanpropanol (3-Hydroxymethyl-cyclohexanpropanol oder 4-Hydroxymethyl-cyclohexanpropanol oder deren Gemische) und
5 bis 95 Gew.-%, besonders bevorzugt 10 bis 90 Gew.-% und ganz besonders bevorzugt 20 bis 80 Gew.-% Hydroxymethyl-cyclohexanisopropanol (3-Hydroxymethyl-cyclohexanisopropanol oder 4-Hydroxymethyl-cyclohexanisopropanol oder deren Gemische), wobei sich die Gewichtsprozente auf die Gewichtssumme der genannten Diole beziehen.

Bevorzugt enthält das C1/C3 Cyclohexandiolgemisch alle vier obigen Diole; das sind 3-Hydroxymethyl-cyclohexanpropanol, 4-Hydroxymethyl-cyclohexanpropanol, 3-Hydroxymethyl-cyclohexanisopropanol und 4-Hydroxymethyl-cyclohexanisopropanol.

Besonders bevorzugt enthält das C1/C3-Cyclohexandiolgemisch
5 bis 85 Gew.-%, insbesondere 10 bis 40 Gew.-% 3-Hydroxymethyl-cyclohexanpropanol,
5 bis 85 Gew.-%" insbesondere 10 bis 40 Gew.-% 4-Hydroxymethyl-cyclohexanpropanol,
5 bis 85 Gew.-%, insbesondere 10 bis 40 Gew.-% 3-Hydroxymethyl-cyclohexanisopropanol und
5 bis 85 Gew.-% , insbesondere 10 bis 40 Gew.-% 4-Hydroxymethyl-cyclohexanisopropanol
wobei sich die Gewichtsprozente auf die Gewichtssumme der vier Diole beziehen.

### Zur Herstellung des C1/C3-Cyclohexandiolgemisch

Die Diole des C1/C3-Cyclohexangemisches können bei der Herstellung des Polymeren in beliebiger Form, auch separat verwendet werden. Wesentlich ist, dass das Polymer die entsprechenden Diole enthält.

Vorzugsweise wird das C1/C3-Cyclohexandiolgemisch vorab hergestellt und als Gemisch für die Herstellung des Polymeren verwendet.

Das C1/C3-Cyclohexandiolgemisch kann in beliebiger Weise hergestellt werden. Die monomeren Verbindungen können z.B. einzeln synthetisiert und anschließend in den gewünschten Verhältnissen gemischt werden.

Das C1/C3-Cyclohexandiolgemisch ist insbesondere durch Hydroformylierung von 4-Vinyl-cyclohexen und anschließende Hydrierung erhältlich; besonders bevorzugt wird dann das so erhaltene Gemisch für die Herstellung der Polymeren verwendet.

Durch Anlagerung von Kohlenmonoxid (CO) und Wasserstoff (H₂) an beide Doppelbindungen des 4-Vinylcyclohexen (Hydroformylierung) und anschließende Hydrierung wird ein Gemisch erhalten, welches die obigen 4 Verbindungen der Formeln I bis IV enthält.

Das so erhaltene C1/C3-Cyclohexandiolgemisch kann gegebenenfalls noch weitere Bestandteile, insbesondere andere Cyclohexanderivate mit Hydroxylgruppen, enthalten.

Das bei der Hydroformylierung erhaltene Gemisch besteht im Allgemeinen zu mindestens 90 Gew.-% aus dem erfindungsgemäß verwendeten C1/C3-Cyclohexandiolgemisch und kann in dieser Form verwendet werden.

Verfahren zur Herstellung von Alkoholen über Hydroformylierung und Hydrierung von Olefinen sind in der Literatur in großer Zahl beschrieben.
Die Wahl des Katalysatorsystems und der optimalen Reaktionsbedingungen sind von der Reaktivität der eingesetzten ungesättigten Verbindung abhängig.
Der Einfluss der Struktur des eingesetzten Olefins auf dessen Reaktivität in der Hydroformylierung ist z.B. von J. Falbe, "New Syntheses with Carbon Monoxide", Springer Verlag, 1980, Berlin, Heidelberg, New York beschrieben.

Die Hydroformylierung kann insbesondere mit modifizierten und/oder unmodifizierten Rhodiumkatalysatoren durchgeführt werden. Die Hydrofomylierung kann gemäß dem Stand der Technik erfolgen, wie diese z.B. in EP-A 0213639, EP-A 0214622,
WO 2004/020380 oder WO 2004/024661 beschrieben ist. Nach Abtrennung des Katalysators durch Extraktion, Absorption oder Destillation kann eine Hydrierung unter den oben beschriebenen Bedingungen zu den entsprechenden Alkoholen erfolgen.

Zur Hydrierung können z.B. Nickel-, Kupfer-, Kupfer/Nickel-, Kupfer/Chrom-, Kupfer/Chrom/Nickel-, Zink/Chrom-, Nickel/Molybdän-Katalysatoren verwendet werden. Die Katalysatoren können trägerfrei sein, oder die hydrieraktiven Stoffe bzw. ihre Vorläufer können auf Trägern, wie beispielsweise SiO₂ oder Al₂O₃, aufgebracht sein. Die Hydrierung wird als Flüssigphasenhydrierung bei einem Druck von 0,5-50 MPa durchgeführt. Die Reaktionstemperaturen im Bereich von 100-220°C bevorzugt bei 140-180°C. Beispiel für solche Hydrierungen sind z.B. in DE-A 19842369 und DE-A 19842370 beschrieben.

Das Verfahren kann diskontinuierlich oder bevorzugt kontinuierlich durchgeführt werden.

### Zu den Polymeren

Die Polymer sind erhältlich durch Polykondensation oder Polyadduktbildung von monomeren Verbindungen unter Mitverwendung des C1/C3 Cyclohexandiolgemisches; die Polymeren können, wenn gewünscht, durch andere oder weitere Umsetzungen chemisch modifiziert, z.B. funktionalisiert oder vernetzt werden.

Bei einer Polykondensation von monomeren Verbindungen kommt es zu einer Abspaltung von Wasser oder Alkohol, bei einer Polyadduktbildung kommt es nicht zu einer Abspaltung.

Bevorzugte Polykondensate sind Polyester, welche durch Umsetzung von Di- oder Polyolen mit Di- oder Polycarbonsäuren, welche auch in Form reaktiver Derivate, wie Anhydride oder Ester eingesetzt werden können, erhältlich sind.
Unter dem Begriff Polyester soll im Folgenden ein Polymer verstanden werden, welches zu mehr als 50 Gew.-%, besonders bevorzugt zu mehr als 70 Gew.-% und insbesondere zu mehr als 90 Gew.-% aus Aufbaukomponenten, ausgewählt aus Diolen, Polyolen, Dicarbonsäuren und Polycarbonsäuren, besteht.

Genannt seien auch Polycarbonatdiole, welche durch Umsetzung von Dialkylcarbonaten mit Diolen unter Abspaltung von Alkoholen erhältlich sind.

Als Polyaddukt sei insbesondere Polyurethan genannt. In Betracht kommen z.B. auch-Polyaddukte, die durch ringöffnende Polymerisation von Lactonen oder Lactamen erhältlich sind.

Unter dem Begriff Polyurethan soll im Folgenden ein Polymer verstanden werden, welches zu mehr als 50 Gew.-%, besonders bevorzugt zu mehr als 70 Gew.-% uns insbesondere zu mehr als 90 Gew.-% aus Aufbaukomponenten, ausgewählt aus Diisocyanaten, Polyisocyanaten, Diolen und Polyolen, besteht.

All diesen Polymeren ist gemeinsam, dass sie im Wesentlichen aus Diolen und mit diesen Diolen reaktiven Verbindungen, wie Di- bzw. Polycarbonsäuren (Polyester) oder Di- bzw. Polyisocyanaten (Polyurethane) aufgebaut sind.

Bevorzugte Polymere sind Polyester und Polyurethane, besonders bevorzugt sind Polyester.

Die Polymere haben vorzugsweise den nachstehenden Gehalt des C1/C3-Cyclohexandiolgemisches; die nachstehenden Gewichtsangaben zum Gehalt des C1/C3-Cyclohexandiolgemisches im Polymer beziehen sich dabei auf die Einheiten des Polymeren, die sich vom C1/C3-Cyclohexandiolgemisch ableiten. Bei Polyaddukten entspricht das Gewicht dieser Einheiten unverändert dem C1/C3-Cyclohexandiolgemisch, bei Polykondensaten ist das Gewicht dieser Einheiten um die Wasserstoffatome der Hydroxylgruppen vermindert.

Bevorzugte Polymere bestehen mindestens zu 0,5 besonders bevorzugt mindestens zu 2, ganz besonders bevorzugt zu mindestens 5 und insbesondere zu mindestens 10 Gew % und in einer besonderen Ausführungsform zu mindestens 20 Gew.-% aus dem C1/C3-Cyclohexandiolgemisch. Da die Mitverwendung von anderen, mit den Diolen reaktiven Verbindungen zwingend ist, bestehen die Polymeren im Allgemeinen zu nicht mehr als 70 Gew.-% insbesondere zu nicht mehr als 60 Gew.-% bzw. zu nicht mehr als 50 Gew.-% aus dem C1/C3-Cyclohexandiolgemisch.

Neben dem C1/C3-Cyclohexandiolgemisch können die Polymeren auch andere Diole oder Polyole als Aufbaukomponenten enthalten. In einer bevorzugten Ausführungsform handelt es sich bei mindestens 10 Gew.-%, besonders bevorzugt bei mindestens 25 Gew.-% und ganz besonders bevorzugt bei mindestens 50 Gew.-% der Diole und Polyole, aus denen die Polymeren bestehen, um das C1/C3 Cyclohexandiolgemisch.

Insbesondere kann es sich bei mindestens 70 Gew.-% bzw. mindestens 90 Gew.-% der Diole und Polyole, aus denen die Polymeren bestehen, um das C1/C3 Cyclohexandiolgemisch handeln.

In einer besonderen Ausführungsform kann es sich bei 100 Gew.-% aller Diole und Poyole, aus denen die Polymeren bestehen, um das C1/C3 Cyclohexandiolgemisch handeln.

### Zu weiteren Bestandteilen der Polyester

Polyester können neben dem C1/C3 Cyclohexandiolgemisch weitere Diole oder Polyole als Aufbaukomponenten enthalten.

Als Diole seien z.B. Ethylenglykol, Propylenglykol, und deren höher kondensierte Vertreter, z.B. wie Diethylenglykol, Triethylenglykol, Dipropylenglykol, Tripropylenglykol etc., Butandiol, Pentandiol, Hexandiol, Neopentylglykol, alkoxylierte phenolische Verbindungen, wie ethoxylierte bzw. propoxylierte Bisphenole, Cyclohexandimethanol genannt; als weitere Aufbaukomponente geeignete Polyole sind trifunktionelle und höherfunktionelle Alkohole, wie Glycerin, Trimethylolpropan, Butantriol, Trimethylolethan, Pentaerythrit, Neopentylglycol, Ditrimethylolpropan, Dipentaerythrit, Sorbit, Mannit.

Die vorstehenden Diole oder Polyole können alkoxyliert, insbesondere ethoxy- und propoxyliert sein. Die Alkoxylierungsprodukte sind in bekannter Weise durch Umsetzung der vorstehenden Alkohole mit Alkylenoxiden, insbesondere Ethylen- oder Propylenoxid, erhältlich. Vorzugsweise beträgt der Alkoxylierungsgrad je Hydroxylgruppe 0 bis 10, d.h. 1 mol Hydroxylgruppe kann vorzugsweise mit bis zu 10 mol Alkylenoxiden alkoxyliert sein.

Die Polyester enthalten weiterhin Dicarbonsäuren oder Polycarbonsäuren als Aufbaukomponenten. Dicarbonsäuren oder Polycarbonsäuren können bei der Herstellung der Polyester auch in Form ihrer reaktiven Derivate, z.B. als Anhydride oder Ester eingesetzt werden. Geeignete Dicarbonsäuren sind Bernsteinsäure, Glutarsäure, Adipinsäure, Sebacinsäure, Isophthalsäure, Terephthalsäure, deren Isomere und Hydrierungsprodukte, wie Tetrahydrophthalsäure. In Betracht kommen auch Maleinsäure und Fumarsäure für ungesättigte Polyester.

Polyester können auch Monoalkohole oder Monocarbonsäuren als Bestandteil enthalten; durch Mitverwendung derartiger Verbindungen kann das Molekulargewicht eingestellt, bzw. begrenzt werden.

Um besondere Eigenschaften zu erreichen werden, können die Polyester besondere funktionelle Gruppen enthalten. Wasserlösliche oder wasserdispergierbare Polyester enthalten die notwendige Menge an hydrophilen Gruppen, z.B. Carboxylgruppen oder Carboxylatgruppen um eine Wasserlöslichkeit oder Wasserdispergierbarkeit zu erreichen. Vernetzbare Polyester, z.B. für Pulverlacke, enthalten funktionelle Gruppen, welche mit dem verwendeten Vernetzungsmittel eine Vernetzungsreaktion eingehen. Es kann sich dabei ebenfalls um Carbonsäuregruppen handeln, wenn eine Vernetzung mit Hydroxylgruppen enthaltenden Verbindungen, z.B. Hydroxyalkylamiden beabsichtigt ist. Bei den funktionellen Gruppen kann es sich auch um ethylenisch ungesättigte Gruppen, z.B. durch Modifizierung des Polyester mit ungesättigten Dicarbonsäuren (Maleinsäure) oder Umsetzung mit (Meth)acrylsäure, handeln; derartige Polyester sind strahlungshärtbar.

### Zu weiteren Bestandteilen der Polyurethane

Polyurethane enthalten als wesentliche Aufbaukomponente Di- oder Polyisocyanate.

Insbesondere zu nennen sind Diisocyanate X(NCO)2, wobei X für einen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-DÜsocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Derartige Diisocyanate sind im Handel erhältlich.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Als Diole bzw. Polyole, welche mit den Di- oder Polyisocyanaten umgesetzt werden, wird erfindungsgemäß das C1/C3 Cyclohexandiolgemisch allein oder im Gemisch mit anderen Di- oder Polyolen verwendet.
Bei Polyurethanen werden als Diole vorzugsweise auch Polyesterdiole eingesetzt. Derartige Polyesterdiole werden vorab durch Umsetzung von Di- oder Polyolen mit Di- oder Polycarbonsäuren erhalten (siehe obige Beschreibung der Polyester). Das C1/C3-Cyclohexandiolgemisch kann in den Polyurethanen in Form derartiger Polyesterdiole enthalten sein. Als weitere Diole, Polyole kommen die oben genanten in Betracht, sei es als Aufbaukomponenten welche direkt mit den Di- oder Polyisocyanaten umgesetzt werden, sei es als Bestandteil der Polyesterdiole. Als Dicarbonsäuren oder Polycarbonsäuren für die Polyesterdiole kommen ebenfalls die oben genannten in Betracht.

Die Polyurethane können auch Monoalkohole oder Monoisocyanate als Bestandteile enthalten; durch Mitverwendung derartiger Verbindungen kann das Molekulargewicht eingestellt, bzw. begrenzt werden.

Um besondere Eigenschaften zu erreichen werden, können die Polyurethane besondere funktionelle Gruppen enthalten. Wasserlösliche oder wasserdispergierbare Polyurethane enthalten die notwendige Menge an hydrophilen Gruppen, z.B. Carboxylgruppen oder Carboxylatgruppen um eine Wasserlöslichkeit oder Wasserdispergierbarkeit zu erreichen. Als geeignete Aufbaukomponente sei z.B. Dimethylolpropionsäure genannt. Vernetzbare Polyurethane, enthalten funktionelle Gruppen, welche mit dem verwendeten Vernetzungsmittel eine Vernetzungsreaktion eingehen. Die Polyurethane können neben Urethangruppen insbesondere auch andere funktionelle Gruppen, z.B. Harnstoffgruppen enthalten, welche durch Umsetzung der Di- oder Polyisocyanate mit Aminoverbindungen, entstehen.

Die Polymere können, wenn gewünscht, bei oder insbesondere auch zu einem späteren Zeitpunkt, z.B. bei der Verwendung, durch andere oder weitere Umsetzungen chemisch modifiziert, z.B. funktionalisiert oder vernetzt werden.

Insbesondere können die Polymeren vernetzende Gruppen enthalten, die, sobald die notwendigen Bedingungen vorliegen, eine Vernetzungsreaktion eingehen. Die Polymeren können insbesondere auch im Gemisch mit Vernetzern verwendet werden, die zum gewünschten Zeitpunkt unter den notwendigen Bedingungen (insbesondere bei erhöhter Temperatur) eine Vernetzungsreaktion mit dem Polymer eingehen.

Nach der Reaktivität der Vernetzer unterscheidet man zwischen einkomponentigen (1 K-) und zweikomponentigen (2K-) Systemen. Bei 2K-systemen wird der Vernetzer erst kurz vor der späteren Verwendung zugegeben, bei 1 K-Systemen kann der Vernetzer frühzeitig zum System gegeben werden (latenter Vernetzer), die Vernetzung tritt erst bei den später eingestellten Bedingungen auf, z.B. bei der Entfernung von Lösemittel und/oder Temperaturerhöhung.

Übliche Vernetzer sind z.B. Isocyanate, Epoxide, Säureanhydride oder bei Polymeren mit radikalisch polymersierbaren ethylenisch ungesättigten Gruppen, auch ethylenisch ungesättigte Monomere wie Styrol.

### Zur Verwendung der Polymere

Die Pulverlacke enthalten die Polymere vorzugsweise als Bindemittel. Sie können weitere Bindemittel und sonstige Additive, z.B. Antioxidantien, Stabilisatoren, Farbstoffe, Pigmente, Verlaufshilfsmittel, Verdicker oder Benetzungshilfsmittel enthalten.

Es handelt sich um Massen, welche als Pulver vorliegen und erst bei erhöhten Temperaturen verarbeitet werden.

Die Verwendung im Rahmen der vorliegenden Erfindung ist die Verwendung der erfindungsgemäßen Polymere als oder in Pulverlacken. Vorzugsweise werden Polyester als Pulverlack verwendet, welche vernetzbar sind.
In einer bevorzugten Ausführungsform wird der Pulverlack durch Mischen und Aufschmelzen des Polyesters, Vernetzers und weiterer Additive, z.B. Pigmente und Verlaufsmittel bei hohen Temperaturen hergestellt. Das Gemisch kann durch anschließende Extrusion und entsprechende Verarbeitung des Extrudats in Pulverform gebracht werden.

Der Pulverlack kann in üblicher Weise, z.B. auch elektrostatisch, auf die gewünschten Substrate; z.B. solche mit Metall-, Kunststoff- oder Holzoberflächen, beschichtet werden.

Die Polymere haben eine geringe Viskosität, sowohl eine geringe Schmelzviskosität (100 % Systeme) oder eine geringe Lösungsviskosität (Polymerlösungen). Die geringe Viskosität erlaubt eine einfache Handhabung, bewirkt gute Beschichtungseigenschaften und erlaubt höhere Feststoffanteile in Lösungen oder Dispersionen oder geringere Bindemittelanteile in pigmenthaltigen Massen.

Die Pulverlacke haben eine hohe Schlagzähigkeit, gute Elastizität und einen guten Glanz.

### Beispiele

### Herstellung des C1/C3 Cyclohexandiolgemisches

1 kg Mischung von Vinylcyclohexen/Toluol (1:1) werden mit 10 ppm Rh(acac)(CO)2 versetzt und in einem gerührten Autoklaven auf 120°C erwärmt. Es wird ein Synthesegasdruck (CO/H₂ 1:1) von 600 bar eingestellt. Die Reaktionsmischung wurde nach 10 h abgekühlt und entspannt.
Der Rohaustrag wurde im Anschluss bei 170°C und 280 bar Wasserstoffdruck an einem 1:1 Gemisch eines Ni/Mo-haltigen und eines Co/Cu/Mo-haltigen Festbettkatalysators in Rieselfahrweise hydriert. Das erhaltene C1/C3-Cyclohexandiolgemisch enthielt die nachstehenden vier Diole in den angegebenen Mengen.

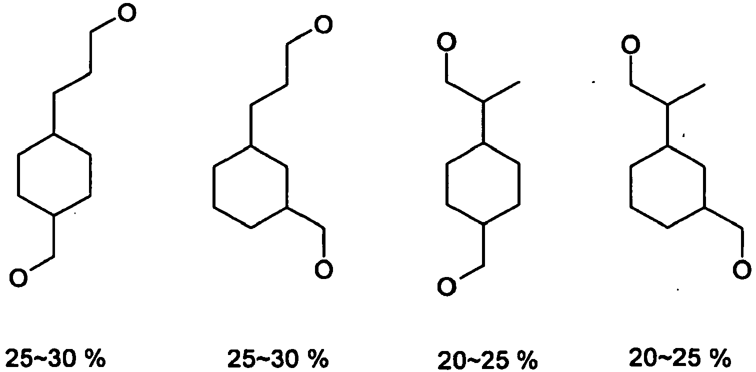

### Herstellung der Polymeren

### Abkürzungen

- ADS:: Adipinsäure
- D:: Polydispersitätsindex (M_{w}/Mₙ)
- DPG:: Dipropylenglykol
- DBZO:: Dibutylzinoxid
- CHA:: C1/C3 Cyclohexandiolgemisch aus Herstellungsbeispiel
- DSC:: Differential-Scanning-Kalorimetrie
- GPC:: Gelpermeationschromatographie
- IPS:: Isophtalsäure
- Mₙ:: zahlenmittleres Molekulargewicht in [g/mol]
- M_{w}:: gewichtsmittleres Molekulargewicht in [g/mol]
- nFA:: nicht-flüchtige Anteile
- NPG:: Neopentylglykol
- OHZ:: OH-Zahl
- SZ:: Säurezahl
- T_{g}:: Glasübergangstemperatur
- TMP:: Trimethylolpropan
- TMSA:: Trimellithsäureanhydrid
- TPS:: Terephtalsäure
- η1:: Schmelzviskosität
- η₂:: Lösungsviskosität

### Polymercharakterisierungsmethoden

Die Molekulargewichtsbestimmungen werden mit GPC durchgeführt. Stationäre Phase: hochvernetztes poröses Polystyrol-Divinylbenzol, kommerziell erhältlich als PL-GEL von Fa. Polymer Laboratories. Laufmittel: THF. Fluss: 0,3 ml/min. Kalibrierung mit Polyethylenglykol 28700 bis 194 Dalton der Fa. PSS.
Die Säurezahl der Polyester wird nach der DIN-Norm-Methode 53169 bestimmt.
Die Bestimmung der Schmelzviskosität η₁ der Polyester wird mit einem Kegel-Platte-Viskosimeter bei 200°C im Rotationsmodus und mit einer Scherrrate von 3400 s⁻¹ durchgeführt. Die Bestimmung der Lösungsviskosität η₂ der Polyester wird mit einem Kegel-Platte-Viskosimeter bei Raumtemperatur im Rotationsmodus durchgeführt. Die Lösungen bestehen aus 70% Polyester und 30% Lösemittel (Mischung Solvesso 100™/Solvenon PM™ 5/1).
Die Tg der Polyester wird mittels DSC nach ASTM D3418 bestimmt.
Herstellung Pulverpolyester mit COOH-Gruppen

### Polyester P1

### Stufe 1 - Herstellung des OH-Gruppen-haltigen Oligomers

210,1 g CHA (1,22 Mol), 139,8 g NPG (1,34 Mol), 40,9 g TMP (0,31 Mol), 405,6 g TPS (2,44 Mol), und 0,5 g Katalysator DBZO werden in einem mit Thermometer, Schutzgaseinleitung, Rührer und Rückflusskühler ausgerüsteten 2L-Vierhalskolben vorgelegt. Unter Durchleiten eines Stickstoffstromes und unter Rückfluss wird die Reaktantenmischung auf 180°C zügig aufgeheizt. Wasser wird kontinuierlich abdestilliert. Anschließend wird das Reaktionsgemisch stufenweise auf 230°C innerhalb von 3 bis 5 St. unter Rühren und Stickstofffluss aufgeheizt, und bei 230°C weitergerührt, bis das Oligomer eine SZ von 10 bis 15 mg KOH/g aufweist. Die SZ des Oligomers beträgt 11 mg KOH/g.

### Stufe II - Herstellung des COOH-Gruppen-haltigen Polymers P1

Das oben synthetisierte Oligomer wird auf 180°C abgekühlt, bevor 101,4 g IPS (0,61 Mol) zugegeben werden. Die Temperatur wird auf 230°C erhöht, und es wird unter diesen Bedingungen weiterkondensiert, bis das Polymer eine SZ von 30 bis 40 mg KOH/g aufweist. Das aus der Polymerisation entstehende Wasser kann am Ende der Reaktion durch schwaches Vakuum gezogen werden, um die erwünschte SZ zu erreichen. Man erhält einen verzweigten COOH-Gruppen-haltigen Pulverpolyester P1, dessen SZ 32 mg KOH/g beträgt. P1 weist eine Glasüberganstemperatur T_{g} von 69°C und eine Schmelzviskosität η₁ von 14,0 Pa.s bei 200°C auf. Die GPC-Analyse liefert folgende Werte: Mₙ= 2970 g/Mol ; D = 11,0 (siehe Tabelle 1).

### Polyester P2 bis P5

Es wird wie bei der Herstellung von P1 verfahren, mit den in Tabelle 1 zusammengefassten Zusammensetzungen. Man erhält verzweigte COOH-Gruppen-haltige Pulverpolyester, deren Kenndaten SZ, Mₙ, D, T₉ und η₁ in Tabelle 1 aufgelistet sind.

**Tabelle 1**

| | Zusammensetzung | | | | | Polyesterkenndaten | | | | |
|---|---|---|---|---|---|---|---|---|---|---|
| Polyester | CHA [g] | NPG [g] | TMP [g] | TPS [g] | IPS [g] | SZ [mg KOH/g] | Mₙ [g/mol] | D | T_{g} [°C] | η₁ [Pa.s] |
| P1 | 210,1 | 139,8 | 40,9 | 405,6 | 101,4 | 32 | 2970 | 11,0 | 69 | 14,0 |
| P2 | 0 | 374,9 | 57,5 | 570,0 | 142,5 | 36 | 2430 | 76,1 | 76 | 38,9 |
| P3 | 142,4 | 287,2 | 16,0 | 481,1 | 206,2 | 77 | 1680 | 2,9 | 62 | 1,9 |
| P4 | 142,4 | 287,2 | 16,0 | 481,1 | 206,2 | 47 | 2455 | 4,9 | 70 | 15,1 |
| P5 | 0 | 396,0 | 17,0 | 510,3 | 218,7 | 57 | 1890 | 3,6 | 69 | 4,4 |

### Herstellung amorpher Polyester mit OH-Gruppen

### Polyester P6

193,75 g CHA (1,13 Mol), 185,88 g NPG (1,79 Mol), 150,94 g TMP (1,13 Mol), 436,60 g IPS (2,63 Mol), 164,46 g ADS (1,13 Mol) und 0,5 g Katalysator DBZO werden in einem mit Thermometer, Schutzgaseinleitung, Rührer und Rückflusskühler ausgerüsteten 2L-Vierhalskolben vorgelegt. Unter Durchleiten eines Stickstoffstromes und unter Rückfluss wird die Reaktantenmischung auf 160°C zügig aufgeheizt. Wasser wird kontinuierlich abdestilliert. Anschließend wird das Reaktionsgemisch stufenweise auf 230°C innerhalb von 3 bis 5 St. unter Rühren und Stickstofffluss aufgeheizt, und bei 230°C weitergerührt, bis das Polyester P6 eine SZ von 10 bis 15 mg KOH/g aufweist. Man erhält einen verzweigten amorphen OH-Gruppen-haltigen Polyester P6, dessen SZ 15 mg KOH/g beträgt. P6 weist eine OHZ von 100 mg KOH/g und eine Glasüberganstemperatur T_{g} von 23°C auf. Die GPC-Analyse liefert folgende Werte:
Mₙ= 2162 g/Mol ; D = 7,2. P6 weist eine Schmelzviskosität η₁ von 2,8 Pa.s bei 200°C auf. Die Lösungsviskosität η₂ des Polyesters P6 bei Raumtemperatur (P6-Lösung mit 70% nFA und einer Mischung Solvesso 100^{™} / Solvenon PM^{™} 5/1 als Lösemittel) beträgt 27,5 Pa.s (siehe Tabelle 2).

### Polyester P7

Es wird wie bei der Herstellung von P6 verfahren, mit der in Tabelle 2 zusammengefassten Zusammensetzung. Die Kenndaten des Polyesters P7 sind in der Tabelle 2 aufgelistet.

**Tabelle 2**

| | Zusammensetzung | | | | | Polyesterkenndaten | | | | | | |
|---|---|---|---|---|---|---|---|---|---|---|---|---|
| Polyester | CHA [g] | NPG [g] | TMP [g] | IPS [g] | ADS [g] | SZ [mg KOH/g] | OHZ [mg KOH/g] | Mₙ [g/mol] | D | T_{g} [°C] | η₁ [Pa.s] | η₂ [Pa.s] |
| P6 | 193,8 | 185,9 | 150,9 | 436,3 | 164,5 | 15 | 100 | 2160 | 7,2 | 23 | 2,8 | 27,5 |
| P7 | 0 | 326,6 | 163,9 | 473,9 | 178,6 | 15 | 108 | 2195 | 16, 8 | 25 | 6,3 | 41,6 |

Das erfindungsgemäße Polymer P 6 hat eine deutlich geringere Schmelzviskosität und eine deutlich geringere Lösungsviskosität als das Vergleichspolymer P6.

### Herstellung wasserverdünnbarer Polyester

### Polyester

### Stufe I - Herstellung des OH-Gruppen-haltigen Oligomers

113,4 g CHA (0,66 Mol), 154,3 g NPG (1,48 Mol), 205,3 g IPS (1,24 Mol) und 0,3 g Katalysator DBZO werden in einem mit Thermometer, Schutzgaseinleitung, Rührer und Rückflusskühler ausgerüsteten 2L-Vierhalskolben vorgelegt. Unter Durchleiten eines Stickstoffstromes und unter Rückfluss wird die Reaktantenmischung auf 160°C zügig aufgeheizt. Wasser wird kontinuierlich abdestilliert. Anschließend wird das Reaktionsgemisch stufenweise auf 220°C innerhalb von 3 bis 5 St. unter Rühren und Stickstofffluss aufgeheizt, und bei 220°C weitergerührt, bis das Reaktionsgemisch eine SZ von 10 bis 15 mg KOH/g aufweist. Die SZ des Oligomers beträgt 12 mg KOH/g.

### Stufe II - Herstellung des Polymers P8

Das oben synthetisierte Oligomer wird auf 160°C abgekühlt, bevor 49,1 g TMSA (0,41 Mol) zugegeben werden. Die Temperatur wird auf 230°C erhöht, und es wird unter diesen Bedingungen weiterkondensiert, bis das Polymer eine SZ von 42 bis 48 mg KOH/g aufweist. Das aus der Polymerisation entstehende Wasser kann am Ende der Reaktion durch schwaches Vakuum gezogen werden, um die erwünschte SZ zu erreichen. Man erhält einen linearen wasserverdünnbaren Polyester P8, dessen SZ 46 mg KOH/g beträgt. P8 weist eine Glasüberganstemperatur Tg von 49 °C und eine Schmelzviskosität η₁ von 7,7 Pa.s bei 200°C auf. Die GPC-Analyse liefert folgende Werte: Mₙ= 1370 g/Mol ; D = 3,4 (siehe Tabelle 3).

### Beurteilung der Hydrolysenbeständigkeit von P8

Eine 20%-ige wässrige kolloidale Lösung von P8 wird hergestellt, auf pH 8 mit N,N-Dimethylethanolamin gebracht und bei 45°C gelagert. Das Zeitintervall bis die kolloidale Lösung ausfällt wird als Maß für die Hydrolysenbeständigkeit des Polyesters genommen (siehe Tabelle 4).

### Polyester P9

Es wird wie bei der Herstellung von P8 verfahren, mit der in Tabelle 3 zusammengefassten Zusammensetzung. Die Kenndaten des Polyesters P9 sind in der Tabelle 3 aufgelistet.

**Tabelle 3**

| | Zusammensetzung | | | | Polyesterkenndaten | | | | | |
|---|---|---|---|---|---|---|---|---|---|---|
| Polyester | CHA [g] | NPG [g] | IPS [g] | TMSA [g] | SZ [mg KOH/g] | OHZ [mg KOH/g] | Mₙ [g/mol] | D | T_{g} [°C] | η₁ [Pa.s] |
| P8 | 113,4 | 154,3 | 205,3 | 79,1 | 46 | 58 | 1380 | 3,4 | 49 | 4,4 |
| P9 | 0 | 490,4 | 451,6 | 174,1 | 47 | 58 | 1250 | 2,3 | 51 | 7,7 |

**Tabelle 4**

| Polyester | Zeit bis Ausfallen der wässrigen Lösung (Tage) |
|---|---|
| P8 | > 30 Tage |
| P9 | 17 Tage |

### Herstellung Pulverlacke

Als Referenzbindemittel (REF) wird das Polyesterharz Uralac® P-862 (T_{g} 58,0°C, SZ 35 mg KOH / g) von DSM Resins B.V. benutzt. Zur Herstellung der Pulverlacke PL3, PL4, PL5 und PLR werden entsprechend 570,0 g Pulverpolyester P3, P4, P5 oder REF jeweils mit 30,0 g kommerziellem Härter Primid® XL-552 (Hydroxylalkylamid der Fa. DSM), 300,0 g Titandioxidpigment Kronos® 2160 (Fa. Kronos), 9,0 g Verlaufmittel Resiflow® PV5 (Fa. Worlée Chemie GmbH) und 2,5 g Entgasungsmittel Benzoin in einem Labor-Universalmischer (Fa. MIT Mischtechnik GmbH) vermischt, geschmolzen und anschließend in einem Doppelschnecken-Extruder (MP 19, Fa. APV) bei 80 - 100°C extrudiert. Das erhaltene Extrudat wird dann grob gebrochen, gemahlen und gesiebt. Die so erhaltenen Pulverlacke PL3, PL4 und PL5 werden folgende Prüfungen unterzogen:

| Prüfparameter | Prüfmethode |
|---|---|
| Fliesseigenschaften | Fluidisierbarkeit DIN ISO 8130-5 |
| | Tablettenablauf DIN ISO 8130-11 |
| Gelzeit | DIN ISO8130-6 |

Im Anschluss werden die Pulverlacke auf Stahlprüfbleche (Q-Panel R-36) elektrostatisch appliziert und bei 160°C 10 Min. lang eingebrannt. Dabei werden Schichtdicken von 60 µm bis 80 µm angestrebt. Den resultierenden Beschichtungen werden folgende Prüfungen unterzogen:

| Prüfparameter | Prüfmethode |
|---|---|
| Erscheinungsbild | visuelle Beurteilung der Oberflächen |
| Glanz | DIN EN ISO 2813 |
| Schlagzähigkeit | EN ISO 6272 |
| Schlagempfindlichkeit | ASTM D 2794 |
| Elastizität | EN ISO 1520 |
| Wetterstabilität | Schnellbewitterungsprüfung (QUV-A) DIN EN ISO 11507 |

Die Ergebnisse der Lackprüfungen sind in der Tabelle 5 zusammengefasst. PL3 und PL4 (auf Basis von Polyester P3 und P4) sind erfindungsgemäß, PL5 und PLR auf Basis des Polyester P5 bzw. des Referenzbindemittels Ref. sind Vergleichsbeispiele.

**Tabelle 5**

| | Prüfparameter | Prüfverfahren | PL3 | PL4 | PL5 | PLR |
|---|---|---|---|---|---|---|
| Pulverlack | Fliesseigenschaften | Fluidisierbarkeit | 158,2 | 159,7 | 160,4 | 124,6 |
| | | Tablettenablauf @ 180°C [mm] | 21,5 | 14,5 | 13,5 | 30,5 |
| | Gelzeit | Gelzeit @ 180°C [s] | 201 | 136 | 154 | 173 |
| Prüfbleche | Erscheinungsbild | Visuelle Beurteilung | 2* | 2 | 2 | 2 |
| | Glanz | Glanzmessung bei 20° | 78 | 66 | 75 | 63 |
| | Schlagzähigkeit | Reverse Impact [kg*cm] | 200 | 200 | 50 | 200 |
| | Schlagempfindlichkeit | Impact [kg*cm] | 200 | 200 | 80 | 200 |
| | Elastizität | Erichsentiefung [mm] | 9,4 | 10,5 | 10,1 | 10,6 |
| | Wetterstabilität | Restglanz nach 500 h QUV-A [%] | 71 | 93 | 98 | 93 |

| | | | | | | |
|---|---|---|---|---|---|---|
| * 2 = orange peel, pinholes | | | | | | |

Die erfindungsgemäßen Pulverlacke PL3 und PL4 zeigen ein sehr gutes Eigenschaftsprofil. Die Fliesseigenschaften sind so gut wie beim Pulverlack PL5 auf Basis von NPG. PL3 und PL4 haben hervorragende mechanische Eigenschaften, die Schlagzähigkeit, Schlagempfindlichkeit und Elastizität sind im vergleich zu PL 5 sehr gut.
Im Vergleich zu PL5 ist bei PL3 und PL4 die niedrigere Polyesterschmelzviskosität vorteilhaft.

## Patentansprüche

1. Pulverlack, enthaltend ein Polymer, **dadurch gekennzeichnet, dass** das Polymer erhältlich ist durch Polykondensation oder Polyadduktbildung von monomeren Verbindungen, wobei als monomere Verbindung ein Gemisch aus Hydroxymethyl-cyclohexanpropanol oder dessen alkoxylierte Derivate und Hydroxymethyl-cyclohexanisopropanol oder dessen alkoxylierte Derivate (im Nachfolgenden kurz C1/C3-Cyclohexandiolgemisch genannt) mitverwendet wird.

2. Pulverlack gemäß Anspruch 1, **dadurch gekennzeichnet, dass** das C1/C3-Cyclohexandiolgemisch
5 bis 95 Gew.-% Hydroxymethyl-cyclohexanpropanol (3-Hydroxymethyl-cyclohexanpropanol oder 4-Hydroxymethyl-cyclohexanpropanol oder deren Gemisch) oder dessen alkoxylierten Derivate und
5 bis 95 Gew.-% Hydroxymethyl-cyclohexanisopropanol (3-Hydroxymethyl-cyclohexanisopropanol oder 4-Hydroxymethyl-cyclohexanisopropanol oder deren Gemisch) oder dessen alkoxylierten Derivate
enthält, wobei sich die Gewichtsprozente auf die Gewichtssumme der genannten Diole beziehen.

3. Pulverlack gemäß Anspruch 1 oder 2, **dadurch gekennzeichnet, dass** das C1/C3-Cyclohexandiolgemisch aus
3-Hydroxymethyl-cyclohexanpropanol,
4-Hydroxymethyl-cyclohexanpropanol,
3-Hydroxymethyl-cyclohexanisopropanol und 4-Hydroxymethyl-cyclohexanisopropanol
besteht, wobei die Diole auch in Form von alkoxylierten Derivaten vorliegen können.

4. Pulverlack gemäß einem der Ansprüche 1 bis 3, **dadurch gekennzeichnet, dass** das C1/C3-Cyclohexandiolgemisch aus
5 bis 85 Gew.-% 3-Hydroxymethyl-cyclohexanpropanol
5 bis 85 Gew.-% 4-Hydroxymethyl-cyclohexanpropanol,
5 bis 85 Gew.-% 3-Hydroxymethyl-cyclohexanisopropanol und
5 bis 85 Gew.-% 4-Hydroxymethyl-cyclohexanisopropanol
besteht, wobei die Diole auch in Form von alkoxylierten Derivaten vorliegen können und sich die Gewichtsprozente auf die Gewichtssumme der vier Diole beziehen

5. Pulverlack gemäß einem der Ansprüche 1 bis 4, **dadurch gekennzeichnet, dass** das C1/C3-Cyclohexandiolgemisch durch Hydroformylierung von 4-Vinyl-cyclohexen und anschließende Hydrierung erhältlich ist.

6. Pulverlack gemäß einem der Ansprüche 1 bis 5, **dadurch gekennzeichnet, dass** das Polymer zu 0,5 bis 70 Gew.-% aus dem C1/C3-Cyclohexandiolgemisch besteht.

7. Pulverlack gemäß einem der Ansprüche 1 bis 6, **dadurch gekennzeichnet, dass** es sich bei dem Polymer um ein Polyester handelt.

8. Pulverlack gemäß einem der Ansprüche 1 bis 6, **dadurch gekennzeichnet, dass** es sich bei dem Polymer um ein Polycarbonatdiol (erhältlich durch Umsetzung von Dialkylcarbonaten mit Diolen unter Abspaltung von Alkohol) handelt.

9. Pulverlack gemäß einem der Ansprüche 1 bis 6, **dadurch gekennzeichnet, dass** es sich bei dem Polymer um ein Polyurethan handelt.

10. Pulverlack gemäß einem der Ansprüche 1 bis 6, **dadurch gekennzeichnet, dass** es sich beim Polymer um ein Polyaddukt erhältlich durch ringöffnende Polymerisation von Lactonen oder Lactamen handelt.

## Claims

1. A powder coating material comprising a polymer, wherein the polymer is obtainable by polycondensation or polyaddition from monomeric compounds, one monomeric compound used being a mixture of hydroxymethylcyclohexanepropanol or its alkoxylated derivatives and hydroxymethylcyclohexaneisopropanol or its alkoxylated derivatives (referred to below for short as C1/C3 cyclohexanediol mixture).

2. The powder coating material according to claim 1, wherein the C1/C3 cyclohexanediol mixture comprises
5% to 95% by weight of hydroxymethylcyclohexanepropanol (3-hydroxymethylcyclohexanepropanol or 4-hydroxymethylcyclohexanepropanol or a mixture thereof) or its alkoxylated derivatives, and
5% to 95% by weight of hydroxymethylcyclohexaneisopropanol (3-hydroxymethylcyclohexaneisopropanol or 4-hydroxymethylcyclohexaneisopropanol or a mixture thereof) or its alkoxylated derivatives,
the percentages by weight being based on the weight sum of the stated diols.

3. The powder coating material according to claim 1 or 2, wherein the C1/C3 cyclohexanediol mixture is composed of
3-hydroxymethylcyclohexanepropanol,
4-hydroxymethylcyclohexanepropanol,
3-hydroxymethylcyclohexaneisopropanol, and
4-hydroxymethylcyclohexaneisopropanol,
it also being possible for the diols to be in the form of alkoxylated derivatives.

4. The powder coating material according to any one of claims 1 to 3, wherein the C1/C3 cyclohexanediol mixture is composed of
5% to 85% by weight of 3-hydroxymethylcyclohexanepropanol
5% to 85% by weight of 4-hydroxymethylcyclohexanepropanol,
5% to 85% by weight of 3-hydroxymethylcyclohexaneisopropanol, and 5% to 85% by weight of 4-hydroxymethylcyclohexaneisopropanol,
it also being possible for the diols to be present in the form of alkoxylated derivatives, and the percentages by weight are based on the weight sum of the four diols.

5. The powder coating material according to any one of claims 1 to 4, wherein the C1/C3 cyclohexanediol mixture is obtainable by hydroformylation of 4-vinylcyclohexene and subsequent hydrogenation.

6. The powder coating material according to any one of claims 1 to 5, wherein the polymer is composed of 0.5% to 70% by weight of the C1/C3 cyclohexanediol mixture.

7. The powder coating material according to any one of claims 1 to 6, wherein the polymer is a polyester.

8. The powder coating material according to any one of claims 1 to 6, wherein the polymer is a polycarbonatediol (obtainable by reacting dialkyl carbonates with diols, with elimination of alcohol).

9. The powder coating material according to any one of claims 1 to 6, wherein the polymer is a polyurethane.

10. The powder coating material according to any one of claims 1 to 6, wherein the polymer is a polyadduct obtainable by ring-opening polymerization of lactones or lactams.

## Revendications

1. Peinture en poudre, contenant un polymère, **caractérisée en ce que** le polymère peut être obtenu par polycondensation ou formation de produit de polyaddition de composés monomères, dans laquelle on utilise en même temps comme composé monomère un mélange d'hydroxyméthyl-cyclohexanepropanol ou de ses dérivés alcoxylés et d' hydroxyméthylcyclohexane-isopropanol ou de ses dérivés alcoxylés (dénommé ci-après en abrégé mélange de C1/C3-cyclohexanediols).

2. Peinture en poudre selon la revendication 1, **caractérisée en ce que** le mélange de C1/C3-cyclohexanediols contient
5 à 95 % en poids d'hydroxyméthyl-cyclohexanepropanol (3-hydroxyméthyl-cyclohexanepropanol ou 4-hydroxyméthyl-cyclohexanepropanol ou leur mélange) ou de ses dérivés alcoxylés et 5 à 95 % en poids d'hydroxyméthyl-cyclohexane-isopropanol (3-hydroxyméthyl-cyclohexane-isopropanol ou 4-hydroxyméthyl-cyclohexane-isopropanol ou leur mélange) ou de ses dérivés alcoxylés,
les pourcentages en poids se rapportant à la somme en poids des diols nommés.

3. Peinture en poudre selon la revendication 1 ou 2, **caractérisée en ce que** le mélange de C1/C3-cyclohexanediols consiste en
3-hydroxyméthyl-cyclohexanepropanol,
4-hydroxyméthyl-cyclohexanepropanol,
3-hydroxyméthyl-cyclohexane-isopropanol et
4-hydroxyméthyl-cyclohexane-isopropanol,
les diols pouvant également se trouver sous forme de dérivés alcoxylés.

4. Peinture en poudre selon l'une quelconque des revendications 1 à 3, **caractérisée en ce que** le mélange de C1/C3-cyclohexanediols consiste en
5 à 85 % en poids de 3-hydroxyméthyl-cyclohexanepropanol,
5 à 85 % en poids de 4-hydroxyméthyl-cyclohexanepropanol,
5 à 85 % en poids de 3-hydroxyméthyl-cyclohexane-isopropanol et 5 à 85 % en poids de 4-hydroxyméthyl-cyclohexane-isopropanol,
les diols pouvant également se trouver sous forme de dérivés alcoxylés et les pourcentages en poids se rapportant à la somme en poids des quatre diols nommés.

5. Peinture en poudre selon l'une quelconque des revendications 1 à 4, **caractérisée en ce que** le mélange de C1/C3-cyclohexanediols peut être obtenu par hydroformylation de 4-vinyl-cyclohexène et hydrogénation subséquente.

6. Peinture en poudre selon l'une quelconque des revendications 1 à 5, **caractérisée en ce que** le polymère consiste à raison de 0,5 à 70 % en poids en le mélange de C1/C3-cyclohexanediols.

7. Peinture en poudre selon l'une quelconque des revendications 1 à 6, **caractérisée en ce que** le polymère consiste en un polyester.

8. Peinture en poudre selon l'une quelconque des revendications 1 à 6, **caractérisée en ce que** le polymère consiste en un polycarbonatediol (pouvant être obtenu par mise en réaction de carbonates de dialkyle avec des diols, avec élimination d'alcool).

9. Peinture en poudre selon l'une quelconque des revendications 1 à 6, **caractérisée en ce que** le polymère consiste en un polyuréthane.

10. Peinture en poudre selon l'une quelconque des revendications 1 à 6, **caractérisée en ce que** le polymère consiste en un produit de polyaddition pouvant être obtenu par polymérisation avec ouverture de cycle de lactones ou lactames.
